# EUROPÄISCHE PATENTSCHRIFT

(11) **EP 1 903 871 B1**
(45) Veröffentlichungstag und Bekanntmachung des Hinweises auf die Patenterteilung: **04.06.2014**
(21) Anmeldenummer: 06777603.9
(22) Anmeldetag: 06.07.2006
(51) Int. Cl.: A01N 49/00, A01N 45/02, A01N 43/90, A01N 43/16, A01N 37/06, A01N 35/06, A01N 31/06, A01N 31/04, A01N 31/02

(54) **VERFAHREN ZUR KONTROLLE VON BORKENKÄFERPOPULATIONEN DURCH STEUERUNG DER BORKENKÄFER-ANTAGONISTEN**
METHOD FOR CONTROLLING BARK BEETLE POPULATIONS BY CONTROLLING BARK BEETLE ANTAGONISTS
PROCEDE DE CONTROLE DE POPULATIONS DE BOSTRYCHES DE L'EPICEA PAR COMMANDE D'ANTAGONISTES DE BOSTRYCHES DE L'EPICEA

(30) Priorität: 07.07.2005 DE 102005031874
(43) Veröffentlichungstag der Anmeldung: 02.04.2008
(73) Patentinhaber: BASF SE, 67056 Ludwigshafen (DE)
(72) Erfinder: ZÜHLKE, Thomas, 62653 Solingen (DE); MUELLER, Michael, 15806 Zossen (DE)
(74) Vertreter: Reitstötter - Kinzebach
(86) Internationale Anmeldenummer: PCT/EP2006/063949
(87) Internationale Veröffentlichungsnummer: WO 2007/006713

(56) Entgegenhaltungen:
- WO-A2-00/62608
- US-A- 3 755 563
- US-A- 5 167 955
- US-B1- 6 306 913
- DANIEL A. HERMS ET AL.: JOURNAL OF CHEMICAL ECOLOGY, Bd. 17, Nr. 8, 1991, Seiten 1705-1714, XP009079284
- T.L. PAYNE ET AL.: JOURNAL OF CHEMICAL ECOLOGY, Bd. 10, Nr. 3, 1984, Seiten 487-492, XP009079285
- W. N. DIXON AND T.L. PAYNE: J. GA. ENTOMOL. SOC., Bd. 15, 1980, Seiten 378-389, XP001249207
- DATABASE CAPLUS [Online] CHEMICAL ABSTRACTS SERVICE, COLUMBUS, OHIO, US; 2003, DAHLSTEIN, D.L. ET AL.: XP002420953 Database accession no. 2003:966072
- DATABASE CAPLUS [Online] CHEMICAL ABSTRACTS SERVICE, COLUMBUS, OHIO, US; 2000, ALDRICH, J.R.: XP002420954 Database accession no. 2000:71265

## Beschreibung

Die vorliegende Erfindung betrifft ein naturnahes Verfahren zur Kontrolle von Borkenkäferpopulationen durch Steuerung von Prädatoren der Borkenkäfer.

Borkenkäfer (*Scolytidae*) können schädliche Insekten in Wäldern sein. Die jüngsten Massenvermehrungen von Borkenkäfern nach den Sturmereignissen "Wiebke" im Jahre 1990 und "Lothar" im Jahre 2000 sind mit 14,8 Mio m³ bzw. 29 Mio m³ Windwurf und -bruch sowie 9,6 Mio m³ bzw. bis zum Jahr 2003 ca. 2,8 Mio m³ Kalamitätsholz durch Borkenkäfer allein in Deutschland eindrucksvolle Beispiele. Untersuchungen im Nationalpark Harz zeigten, dass infolge der Massenvermehrungen des Buchdruckers (*Ips typographus* L.) in nicht bewirtschafteten Wäldern der Gemeinen Fichte (*Picea abies* (L.) Karst.) 70 % der Altfichten innerhalb von fünf Jahren abstarben. Sogar in Mischbeständen aus Gemeiner Fichte und Rot-Buche (*Fagus sylvatica* L.) wurden die Fichten zum Absterben gebracht.

Auch übliche forstwirtschaftliche Praktiken, wie die an sich ökologisch wünschenswerte Bereitstellung von Totholz im Wald, sind bezüglich der Vermehrung von Borkenkäfern und den damit verbundenen Risiken kritisch. Bei der Bereitstellung von Totholz durchläuft nämlich das Holz eine Phase, in der es für potentiell schädliche rinden- und holzbrütende Borkenkäfer bruttauglich ist. Aus diesem Grunde ist es bei Nadelbaumarten, insbesondere bei Gemeiner Fichte (*Picea abies* (L.) Karst.) und Lärchen (*Larix* spp.), problematisch, gerade stärker dimensioniertes Totholz bereitzustellen.

Als problematische Schädlinge erweisen sich Borkenkäfer auch bei der Bereitstellung von Rohholz. Die heutige Nutzung und Lieferung von Rohholz verzichtet nämlich zumeist auf eine Lagerung an den Holzverarbeitungswerken. Stattdessen verbleibt das Rohholz bis kurz vor der Verarbeitung im Wald. Da, in Anpassung an die Verarbeitungsbedürfnisse, ganzjährig Holz geschlagen wird, ist es dem Befall durch rinden- und holzbrütende Insekten, insbesondere Borkenkäfer, ungehindert ausgesetzt. Bei wertvolleren Sortimenten, wie Wert-, Säge- und Profilzerspanerholz, wird daher oft eine vorbeugende oder sogar routinemäßige Behandlung mit unselektiven Insektiziden, beispielsweise mit Wirkstoffen aus der Gruppe der Pyrethroide, vorgenommen, da selbst ein Befall allein durch rindenbrütende Borkenkäfer zur Entwertung des Holzes führen kann.

Dahlsten et al. (Environmental Entomology (2003), 32(5), 1115-1122) erstellen ein vollständiges Bild der üblichen Strategien für die Bekämpfung von Borkenkäfern.

Das bisherige Monitoring von Borkenkäferpopulationen beruht im Wesentlichen auf der Aggregation von Borkenkäfern mittels artpezifischer Aggregationspheromone. Diese dienen dazu, die Borkenkäfer der dem Pheromon zugehörigen Art in Fallen zu Zwecken der Überwachung oder an Fangbäumen bzw. anderen natürlichen Brutmaterialien zu Zwecken der Bekämpfung zu aggregieren. Die Fallenfänge stellen jedoch nach vorliegenden Erkenntnissen eine für Gegenmaßnahmen unzureichende Populationsabschöpfung bei den Borkenkäfern dar. Die Fangbaum- und Fangreisigverfahren wiederum sind materiell und personell sehr aufwändig und bedienen sich oft gleichzeitig der Verwendung von unselektiven Pflanzenschutzmitteln.

Es besteht daher Bedarf an der Bereitstellung eines Verfahrens zur Kontrolle von Borkenkäferpopulationen, das einfach und möglichst ohne den Einsatz von Insektiziden durchgeführt werden kann.

Es wurde überraschenderweise gefunden, dass es möglich ist, die Prädatoren (Freßfeinde) der Borkenkäfer mittels Ausbringen geeigneter Lockstoffe zu aggregieren, so dass durch die Aggregation dieser Prädatoren eine ausreichende Wirkung erreicht werden kann, um die Bildung größerer Borkenkäferpopulationen wirksam zu verhindern oder zu verringern.

Dementsprechend betrifft die vorliegende Erfindung ein Verfahren zur Kontrolle von Populationen von Borkenkäfern (Scolytidae), umfassend die Aggregation von Prädatoren der Borkenkäfer im Habitat der Borkenkäfer, indem man wenigstens einen Lockstoff, welcher eine Anlockung von Prädatoren der zu kontrollierenden Borkenkäfer bewirkt, an den Orten ausbringt, an denen eine Kontrolle der Borkenkäfer-Population erreicht werden soll, wobei der ausgebrachte Lockstoff von dem Aggregationspheromonbukett der zu kontrollierenden Borkenkäfer-Spezies verschieden ist und dem Pheromonbukett einer in dem Habitat fremden Spezies eines Borkenkäfers entspricht.

Durch gezielte Auswahl der Lockstoffe ist es zudem möglich, die im Habitat heimischen Borkenkäfer nicht durch diesen Lockstoff anzulocken. Das Erscheinen der Borkenkäfer an den zu schützenden Bäumen bzw. Rohhölzern erfolgt nur infolge der Anlockung durch die Inhaltsstoffe der Bäume bzw. Rohhölzer selbst.

Das erfindungsgemäße Verfahren lässt sich in einfacher Weise durchführen, da, anders als in den bekannten Verfahren zur Kontrolle von Borkenkäferpopulationen, lediglich das Ausbringen geeigneter Lockstoffe erforderlich ist, ein Aufstellen von Fallen, Fanghölzern oder Fanghaufen hingegen nicht. Zudem ist der Einsatz von Insektiziden nicht erforderlich, da eine wirksame Abschöpfung der jeweiligen Borkenkäferpopulation durch die aggregierten Populationen der Prädatoren erreicht wird. Daher kann das erfindungsgemäße Verfahren insbesondere in Schutzgebieten und bei der zertifizierten Waldwirtschaft eingesetzt werden.

Der Begriff "Kontrolle" im Bezug auf die Population der Borkenkäfer bedeutet hier und im Folgenden sowohl die Verhinderung der Bildung größerer Borkenkäferpopulationen als auch deren Verringerung oder Vernichtung.

Beispiele für typische Borkenkäferarten, deren Populationen durch das erfindungsgemäße Verfahren kontrolliert werden können, sind
1. die an Fichten (Gattung *Picea*), insbesondere an Gemeiner Fichte (*Picea abies* (L.) Karst.), vorkommenen Arten:
   - Großer Achtzähniger Fichtenborkenkäfer oder Buchdrucker (*Ips typographus* L.) und
   - Sechszähniger Fichtenborkenkäfer oder Kupferstecher (*Pityogenes chalcographus* L.);
2. die an Lärchen (*Larix* spp.) vorkommende Art:
   - Lärchen borken käfer (*Ips cembrae* Heer);
3. die an Kiefern *(Pinus spp.*), insbesondere an Gemeiner Kiefer (*Pinus sylvestris* L.), vorkommenden Arten:
   - Zwölfzähniger Kiefernborkenkäfer (*Ips sexdentatus* Boern.),
   - Scharfzähniger (bzw. Sechszähniger) Kiefemborkenkäfer (*Ips acuminatus* Gyll.),
   - Zweizähniger Kiefernborkenkäfer (*Pityogenes bidentatus* Hrbst.).
   - Waldgärtner (*Tomicus* spp., z. B. *Tomicus piniperda* und *Tomicus minor*),
   - *Dendroctonus* spp. (z. B. *Dendroctonus frontalis* Z. und *Dendroctonus rufipenuis*),
   - *Ips* ssp (*Ips avulsus, Ips grandicollis, Ips calligraphus* und *Ips* pin);
4. die an Nadel- oder Läubbäumen sowie deren Rohhölzern vorkommende Nutzholzborkenkäfer: z. B.
   - Gestreifter Nutzholzborkenkäfer (*Xyloterus lineatus* OI.),
   - Laubnutzholzborkenkäfer (*Xyloterus domesticus* L.);
5. die an Läubbäumen vorkommenden Borkenkäferarten: z.B.
   - Kleiner Buchenborkenkäfer (*Traphrorychus bicolor* Hbst.),
   - Eichensplintkäfer (*Scolytus intricatus* Rtzb.).

Bei den anzulockenden Prädatoren der Borkenkäfer handelt es sich typischerweise um solche Käfer (Coleoptera), die bekanntermaßen Fraßfeinde von Borkenkäfern sind.

Zu den typischen Prädatoren von Borkenkäfern zählen Käferarten aus der Familie der Buntkäfer (Cleridae), insbesondere aus der Gattung Thanasimus, beispielsweise die Arten *Thanasimus formicarius* L., *Thanasimus rufipes Brahm., Thanasimus substriatus, Thanasimus dubius, Thanasimus undatulus* und *Thanasimus mutillarius* F., aber auch Arten aus den Gattungen Opilio, Tillus und Corynetes. Weiterhin stammen bekannte Borkenkäferprädatoren z. B. aus den Familien Ostömidae - typische Art ist der Jagdkäfer, *Nemosoma elongatum* L. - *Staphilinidae* und *Rhizophagidae.* Käfer dieser Familien können ebenfalls mit dem erfindungsgemäßen Verfahren aggregiert werden. Bei den genannten Käfern leben zumeist sowohl die Imagines als auch die Larven räuberisch. Die vorgenannten Käfergattungen sind weit verbreitet und zeigen eine gute Wirtsanpassung, eine hohe Such- und Prädationskapazität und eine hohe sowie anpassungsfähige Reproduktionsrate. Trotz einer guten Wirtsanpassung sind diese Prädatoren auch in der Lage, zahlreiche andere Wirte sogar an anderen Baumarten, d. h. in vollkommen anderen Habitaten bis hin zum Totholz, zu nutzen.

Eine Auswahl von relevanten Borkenkäfern, ihren Hauptwirtsbäumen und ihren Prädatoren ist in Tabelle 1 angegeben.

**Tabelle 1: Ausgewählte Borkenkäfer, deren Hauptwirtsbaumarten und je ein wichtiger Prädator**

| **Borkenkäferart** | **Hauptwirtbaum** | **Prädator** |
|---|---|---|
| Buchdrucker | Gemeine Fichte | Ameisenbuntkäfer |
| Kupferstecher | Gemeine Fichte | Jagdkäfer |
| Lärchenborkenkäfer | Europäische Lärche | Ameisenbuntkäfer |
| Zwölfzähniger Kiefernborkenkäfer | Gemeine Kiefer | Ameisenbuntkäfer |
| Sechszähniger Kiefernborkenkäfer | Gemeine Kiefer | Ameisenbuntkäfer |
| Zweizähniger Kiefernborkenkäfer | Gemeine Kiefer | Jagdkäfer |
| Kleiner Buchenborkenkäfer | Rot-Buche | Jagdkäfer |
| Waldgärtner (*Tomicus* spp.) | Gemeine Fichte | Ameisenbuntkäfer |
| *Dendroctonus* spp. | *Pinus* spp. | *Thanasimus dubius* |
| *Ips grandicollis* | *Pinus* spp. | *Thanasimus dubius* |
| *Ips avulsus* | *Pinus* spp. | *Thanasimus dubius* |
| *Ips calligraphus* | *Pinus* spp. | *Thanasimus dubius* |
| *Ips pin* | *Pinus* spp. | *Thanasimus dubius* |

Lockstoffe (Pheromone) der Borkenkäfer, welche eine Aggregation der vorgenannten Prädatoren bewirken, weil sie gleichzeitig von den Prädatoren als Kairomone genutzt werden, sind grundsätzlich aus der Fachliteratur bekannt. Eine Übersicht findet man beispielsweise in "The Pherobase - Database of Insect Pheromones and Semiochemicals" [http://www.pherobase.com]. Der Begriff "Lockstoff" umfasst dabei sowohl Reinsubstanzen, die als Lockstoffe wirken, als auch Mischungen verschiedener Substanzen, die als Lockstoffe wirken, sog. Lockstoff- bzw. Pheromonbuketts.

Insbesondere umfasst der Lockstoff bzw. das Lockstoffbukett im erfindungsgemäßen Verfahren wenigstens eine der folgenden Komponenten einschließlich aller Isomere davon, sofern nichts anderes angegeben ist:
Ipsdienol = (2-Methyl-6-methylen-2,7-octadien-4-ol),
alpha-Pinen = (2,6,6-Trimethylbicyclo[3.1.1]hept-2-en),
cis-Verbenol = (1S,2S,5S)-4,6,6-Trimethylbicyclo[3.1.1]hept-3-en-2-ol),
Lineatin = (3,3,7-Trimethyl-2,9-dioxatricyclo[3.3.1.0_{4,7}]nonan),
Lanierone = 2-Hydroxy-4,4,6-trimethyl-2,5-cyclohexadien-1-on
Frontalin = 1,5-Dimethyl-6,8-dioxabicyclo[3.2.1]octan
Seudenol = 3-Methylcyclohex-2-enol,
3R,6R-Vittatol = ((3R,6R)-3-Hydroxy-2,2,6-trimethyltetrahydropyran),
Chalcogran = 2-Ethyl-1,6-dioxaspiro[4,4]nonan oder
Bicolorin = (1S,2R,5R)-2-Ethyl-1,5-dimethyl-6,8-dioxabicyclo(3.2.1)octan.

Daneben können die Lockstoffbuketts noch ein oder mehrere weitere Lockstoffsubstanzen wie
Methylbutenol,
Methylbutinol,
Ipsenol = (2-Methyl-6-methylen-7-octen-4-ol),
2-Phenylethanol,
3R,6R-Vittatol = ((3R,6R)-3-Hydroxy-2,2,6-trimethyltetrahydropyran),
Amitinol = (trans-2-Methyl-6-methylen-3,7-octadien-2-ol) oder
Grandisol = (cis-1-Methyl-2-(1-methylethenyl)cyclobutanethanol)
enthalten.

Von diesen Lockstoffen bzw. Lockstoffbuketts ist bekannt, dass sie Prädatoren der Borkenkäfer und speziell Käfer der Gattung Nemosoma und Käfer der Gattung Thanasimus anzulocken vermögen und daher zur Aggregation dieser Käfer geeignet sind.

Insbesondere eignet sich zur Anlockung von Buntkäferarten ein Lockstoff oder Lockstoffbukett, das wenigstens eine der folgenden Substanzen enthält: Ipsdienol, α-Pinen, Lineatin, Seudenol, Lanierone, Frontalin und/oder cis-Verbenol. Daneben können diese Lockstoffbuketts noch ein oder mehrere, z. B. 1, 2 oder 3 weitere Lockstoffsubstanzen wie Methylbutenol, Methylbutinol, Ipsenol, 2-Phenylethanol oder Amitinol enthalten.

Beispielsweise eignen sich zur Anlockung von Ameisenbuntkäfern die folgenden Lockstoffe und Lockstoffbuketts a.1 bis a.4:
a.1 Ipsdienol + cis-Verbenol + Methylbutenol (Pheropfax®),
a.2 Ipsdienol + 2-Phenylethanol + α-Pinen (Sexowit®),
a.3 (+)-Ipsdienol + (-)-Ipsenol,
a.4 Ipsdienol + Methylbutenol + Ipsenol + Amitinol (Cembräwit®).

Zur Anlockung von der Buntkäferart *Thanasimus dubius* F. eignen sich beispielsweise die folgenden Lockstoffbuketts:
a.5 α-Pinen + Ipsdienol + Lanierone,
a.6 Seudenol + α-Pinen,
a.7 Ipsdienol, insbesondere ein Enantionmerengemisch mit etwa 25 % S-Isomer und 75 % R-Isomer.

Zur Anlockung von der Buntkäferart *Thanasimus femoralis* Z. eignet sich beispielsweise die folgenden Lockstoffbuketts:
a.8 Ipsdienol + Ipsenol,
a.9 cis-Verbenol.,

Zur Anlockung von der Buntkäferart *Thanasimus undatulus* eignet sich beispielsweise die folgenden Lockstoffbuketts:
a. 10 Frontalin + Seudenol,
a.11 Seudenol + α-Pinen,
a.12 Verbenol.

Insbesondere eignet sich zur Anlockung von Jagdkäfem ein Lockstoff oder Lockstoffbukett, das wenigstens eine der folgenden Substanzen enthält: cis-Verbenol, 3R,6R-Vittatol, Chalcogran oder Bicolorin. Daneben können diese Lockstoffbuketts noch ein oder mehrere weitere z. B. 1,2 oder 3 Lockstoffsubstanzen wie Grandisol, Methylbutenol, Methylbutinol und/oder Methyl-(2E, 4Z)-2,4-decadienoat enthalten.

Beispielsweise eignen sich zur Anlockung von Jagdkäfern die folgenden Lockstoffbuketts:
b.1 Chalcogran (Ethyl-1,6-dioxaspiro[4,4]nonan) + Methylbutenol oder Methylbutinol + Methyl-(2E, 4Z)-2,4-decadienoat (Chalcoprax®),
b.2 cis-Verbenol + Grandisol,
b.3 Bicolorin ((1S,2R,5R)-2-Ethyl-1,5-dimethyl-6,8-dioxabicyclo(3.2.1)octan) sowie
b.4 Vittatol.

Das Ausbringen des Lockstoffs bzw. Lockstoffbuketts zur Anlockung der Prädatoren erfolgt in an sich bekannter Weise unter Verwendung von sogenannten Dispensern, die eine gleichmäßige Abgabe des Lockstoffs bzw. Lockstoffbuketts an die Umgebung gewährleisten. Hierbei handelt es sich in der Regel um kleine Kunststoffbehältnisse, z. B. Ampullen oder Folienbeutel aus Kunststoffmaterialien, die den (die) Lockstoff(e) enthalten, wobei der (die) Lockstoff(e) durch die Wandmaterialien des Behältnisses difundieren und so in gleichmäßiger Weise an die Umgebung abgegeben werden. Derartige Lockstoff-haltige Behältnisse sind dem Fachmann bestens bekannt und im Handel erhältlich, beispielsweise unter den Handelsbezeichnungen Pheroprax, Typosan, Ipsowit, Chalcosan, Chalcoprax, Chalcowit, Cemsan, Cembräwit, Trypowit, Linoprax und dergleichen.

Das Ausbringen dieser Vorrichtungen erfolgt naturgemäß an den Orten, an denen eine Kontrolle der Borkenkäferpopulation angestrebt wird, z. B. in Waldbereichen mit Windbruch, Süd-West Hängen, Bestände mit Borkenkäfervorbefall oder mit Schadholzstadien der Totholzbereitstellung sowie an Holzlagern.

Hierzu reicht es in der Regel aus, in Abhängigkeit von der Größe der zu schützenden Fläche sowie der Menge und Verteilung des zu schützenden Rohholzes, ein oder mehrere lockstoffhaltige Behältnisse an denjenigen Orten, an denen die Kontrolle der Borkenkäferpopulation erreicht werden soll, zu platzieren. Dazu sind Konstruktionen und Füllmengen heute gebräuchlicher Dispenser/Ampullen möglich. Da die Aggregation der Prädatoren jedoch überall auf dem zu schützenden Objekten, d. h. nicht wie bisher punktuell in Fallen, erfolgen soll und die Wirkung nur für den Zeitraum der notwendigen Kontrolle erforderlich ist, sollten mehrere und kleinere Dispenser/Ampullen mit einer Wirkungsdauer von 30 bis zu 120 Tagen ausreichend sein. Selbstverständlich können jedoch auch Dispenser/Ampullen mit längeren Wirkungsdauern von mehr als 30 Tagen, z.B. mit Wirkungsdauern von bis zu 2 oder 3 Monaten eingesetzt werden.

Das Anlocken der Prädatoren kann zu einem Zeitpunkt erfolgen, an dem bereits ein Befall mit Borkenkäfern zu verzeichnen ist. Vorteilhafterweise wird man jedoch die Prädatoren zu einem Zeitpunkt anlocken, zu dem ein Befall durch die potentiell schädliche Borkenkäferart noch nicht eingesetzt hat (prophylaktisch). Auf diese Weise lässt sich ein Befall weitgehend verhindern oder zumindest deutlich vermindern, ohne dass ein Pflanzenschutzmitteleinsatz erforderlich ist. Der Zeitpunkt, zu dem ein solcher Befall mit Borkenkäfern zu erwarten ist, kann ein Fachmann mit hinreichender Genauigkeit vorhersehen. Dieses wäre auch fachlich unterstützend durch handelsübliche Monitoringverfahren mit Borkenkäferpheromonen möglich.

Vorzugsweise wird man den Lockstoff so auswählen, dass er an dem Ort, an dem eine Kontrolle der Borkenkäfer-Population erreicht werden soll, eine selektive Anlockung der jeweiligen Prädatoren bewirkt.

Gemäß einer ersten Ausführungsform des erfindungsgemäßen Verfahrens wird man zu diesem Zweck ein Lockstoffbukett verwenden, das bekanntermaßen zur Anlockung habitatfremder Borkenkäfer geeignet ist. Mit anderen Worten, man verwendet einen Lockstoff bzw. ein Lockstoffbukett, das zur Anlockung solcher Borkenkäfer geeignet ist, die an den Ort, an dem eine Kontrolle erwünscht ist, nicht heimisch sind. Es hat sich nämlich überraschenderweise gezeigt, dass man Prädatoren von im jeweiligen Habitat heimischen Borkenkäfer gezielt auch durch solche Lockstoffe bzw. Lockstoffbuketts anlocken kann, die für Borkenkäfer charakteristisch sind, welche in dem zu kontrollierenden Habitat nicht heimisch sind. Beispielsweise kann man Lockstoffe bzw. Lock-stoffbuketts von Borkenkäfern der Gemeinen Fichte an Schutzobjekten, beispielsweise Rohhölzer, Tothölzer oder Bäumen verwenden, die nicht aus Fichtenroh- oder -totholz bestehen und sich nicht in Wäldern von Fichten befinden. In gleicher Weise lässt sich dieser Effekt auch zum Schutz anderer Baumarten, beispielsweise Kiefern, Lärchen, Tannen, Eichen, Buchen und dergleichen ausnutzen.

Eine weitere Möglichkeit der selektiven Anlockung besteht darin, dass man ein Lockstoff oder Lockstoffbukett verwendet, das nur einen Teil der für das Lockstoffbukett der zu bekämpfenden Borkenkäferart charakteristischen Bestandteile enthält. So sollten zur Anlockung der Prädatoren von Borkenkäfern nur ein, zwei oder drei der Bestandteile eines Lockstoffbuketts, welches für eine Borkenkäferart charakteristisch ist, ausreichen, um die jeweiligen Prädatoren dieser Borkenkäferart hinreichend anzulocken. Aufgrund des Fehlens einer oder mehrerer der für die Borkenkäferart spezifischen Bestandteile bewirken diese Lockstoffe bzw. Lockstoffbuketts sogar in Habitaten der Borkenkäfer, aus deren Lockstoffbukett die Ableitung der Bestandteile erfolgte, keine oder nur eine unwesentliche Anlockung der zu kontrollierenden Borkenkäfer. Durch Neukombination von Bestandteilen bekannter Lockstoffe einer Borkenkäferart sowie durch Neukombination von Bestandteilen der Lockstoffe verschiedener Borkenkäferarten, sollte es zudem möglich sein, verstärkt einen Prädator bzw. gezielt mehrere Prädatorenarten gleichzeitig aggregieren zu können.

Eine Zusammenstellung von Borkenkäferarten, ihren Prädatoren und der zur selektiven Anlockung der Prädatoren möglichen Lockstoffbuketts ist in Tabelle 2 angegeben.

**Tabelle 2: Ausgewählte Borkenkäferarten deren wichtigste Prädatoren und die möglichen Prädatoren-Lockstoffbuketts**

| **Borkenkäferart** | **Prädator** | **Selektive(r) Lockstoff(e)** |
|---|---|---|
| Buchdrucker | Ameisenbuntkäfer | a.2, a.3, a.4 |
| Kupferstecher | Jagdkäfer | b.2, b.3 |
| Lärchenborkenkäfer | Ameisenbuntkäfer | a.1, a.2, a.3 |
| Zwölfzähniger Kiefemborkenkäfer | Ameisenbuntkäfer | a.1, a.3, a.4 |
| Sechszähniger Kiefernborkenkäfer | Ameisenbuntkäfer | a.1, a.3, a.4 |
| Zweizähniger Kiefernborkenkäfer | Jagdkäfer | b.1, b.3 |
| Kleiner Buchborkenkäfer | Jagdkäfer | b.1, b.2 |
| Waldgärtner | Ameisenbuntkäfer | a.1, a.3, a.4 |
| *Dendroctonus* spp. | *Thanasismus dubius* | a.5, a.6, a.7 |
| *Ips grandicollis* | *Thanasismus dubius* | a.5, a.6, a.7 |
| *Ips avulsus* | *Thanasismus dubius* | a.5, a.6, a.7 |
| *Ips calligraphus* | *Thanasismus dubius* | a.5, a.6, a.7 |
| *Ips pin* | *Thanasismus dubius* | a.5, a.6, a.7 |

Die folgenden Beispiele dienen der weiteren Erläuterung der Erfindung und sind nicht einschränkend zu verstehen.

In Beständen der Gemeinen Kiefer des Nordostdeutschen Tieflandes (Land Brandenburg, Amt für Forstwirtschaft Lübben, Oberförsterei Baruth, Revier Radeland) wurden im Jahre 2003 Theysohn®-Borkenkäfer-Schlitzfallen betrieben. Die Modifikation dieser Fallen bestand darin, dass die Wasserabläufe verschlossen und die Fangbehälter mit einer insektenkonservierenden aber nicht anlockend wirkenden Flüssigkeit gefüllt wurden. Auf diese Weise konnten keine gefangenen Organismen aus den Fallen entkommen und unversehrt bestimmt werden. Als Köder wurden handelsübliche Pheroprax®-und Chalcoprax®-Dispenser eingesetzt. Die Fallen wurden vom 13. 04. 2003 bis zum 29. 08. 2003 betrieben.

Im Ergebnis wurden in den vier Pheroprax®-Fallen insgesamt 873 *Thanasimus formicarius* und 2.815 *Thanasimus rufipes* sowie in den vier Chalcoprax®-Fallen 109 *Nemosoma elongatum* und 311 Individuen aus der Familie der *Staphilinidae* gefangen.

Von den in Kiefernwäldern ständig präsenten und zu erwartenden Borkenkäfern der Arten *Tomicus piniperda, Tomicus minor, Ips sexdentatus* und *Ips acuminatus,* die zum Beutespektrum der *Thanasimus-Arten* in Kiefernwäldern gehören, wurden jedoch in den Pheroprax®-Fallen insgesamt lediglich 20 *Ips acuminatus* vorgefunden sowie 11 *Hylastes angustatus* und 4 *Hylastes ater*, deren Vorkommen an lebenden Bäumen und Rohholz unbedeutend ist. Außerdem kamen 127 *Ips typographus* vor, die möglicherweise aus Fichtenholz eines in der Nähe befindlichen Holzverarbeitungswerkes stammten und i. d. R. nicht in der Lage sind Bäume oder Rohholz der Gemeinen Kiefer zu besiedeln.

Von dem in Kiefernwäldern ständig präsenten und zu erwartenden *Pityogenes bidentatus,* der ein typisches Beuteinsekt für *Nemosoma elongatum* im Kiefernwald ist, konnte in den Chalcoprax®-Fallen kein einziges Exemplar vorgefunden werden. Von anderen Kiefernborkenkäfern wurden lediglich 16 *Hylastes angustatus,* 12 *Hylastes ater,* ein *Tomicus piniperda* und 3 *Ips acuminatus* vorgefunden. Außerdem kamen mit 18.526 Individuen für Kiefernwälder bisher unbekanntermaßen viele *Pityogenes chalcographus* vor, von denen bisher keine Schadwirkung in Kiefernwäldern bekannt ist, die aber aufgrund der Entfernung zum Holzverarbeitungswerk wahrscheinlich nicht aus dort verarbeiteten Fichtenrohhölzern stammen können.

Die vorliegenden Ergebnisse zeigen, dass es möglich ist, mit Hilfe der Lockstoffe von Borkenkäfern, die gewöhnlich an der Gemeinen Fichte vorkommen, in Wäldern der Gemeinen Kiefer die Prädatoren von Kiefernborkenkäfern zu aggregieren, ohne dass die heimischen Kiefemborkenkäfer gleichzeitig angelockt werden. Die geringen Beifänge von Kiefernborkenkäfern und Fichtenborkenkäfem sind sowohl von der Anzahl als auch von der Artenzusammensetzung für Bäume und Rohhölzer der Gemeinen Kiefer vollkommen unbedeutend.

## Patentansprüche

1. Verfahren zur Kontrolle von Populationen von Borkenkäfern (*Scolytidae*), umfassend die Aggregation von Prädatoren der Borkenkäfer im Habitat der Borkenkäfer, indem man wenigstens einen Lockstoff, welcher eine Selektive Anlockung von Prädatoren der zu kontrollierenden Borkenkäfer bewirkt, an den Orten ausbringt, an denen eine Kontrolle der Borkenkäfer-Population erreicht werden soll, wobei der ausgebrachte Lockstoff von dem Aggregationspheromonbukett der zu kontrollierenden Borkenkäfer-Spezies verschieden ist und dem Pheromonbukett einer in dem Habitat fremden Spezies eines Borkenkäfers entspricht.

2. Verfahren nach einem der vorhergehenden Ansprüche, wobei man den wenigstens einen Lockstoff vor oder während des Befalls durch Borkenkäfer ausbringt.

3. Verfahren nach einem der vorhergehenden Ansprüche, wobei der die Aggregation der Prädatoren bewirkende Lockstoff wenigstens eine Lockstoff-Komponente des Aggregationspheromonbuketts der zu kontrollierenden Borkenkäfer-Spezies umfasst.

4. Verfahren nach Anspruch 3, wobei die Prädatoren ausgewählt sind unter Käfern (*Coleoptera*) aus den Familien *Cleridae,* insbesondere der Gattung *Thanasimus, Ostomidae,* insbesondere der Gattung *Nemosoma, Staphilinidae* und *Rhizophagidae.*

5. Verfahren nach einem der Ansprüche 3 oder 4, wobei der Lockstoff wenigstens eine der folgenden Komponenten einschließlich deren Isomere umfasst: Ipsdienol, Verbenol, Lineatin, 3R,6R-Vittatol Seudenol, Lanierone, Frontalin, alpha-Pinen, Chalcogran oder Bicolorin.

## Claims

1. A method of controlling populations of bark-beetles (Scolytidae) comprising the aggregation of bark-beetle predators in the habitat of the bark-beetles, by applying, at the locations where control of the bark-beetle population is to be achieved, at least one attractant which brings about selective attraction of predators of the bark-beetles to be controlled, wherein the attractant applied differs from the aggregation pheromone bouquet of the bark-beetle species to be controlled and corresponds to the pheromone bouquet of a bark-beetle species which is nonendemic to the habitat.

2. The method according to the preceding claim, wherein the at least one attractant is applied before or during the bark-beetle attack.

3. The method according to either of the preceding claims, wherein the attractant which brings about the aggregation of the predators comprises at least one attractant component of the aggregation pheromone bouquet of the bark-beetle species to be controlled.

4. The method according to claim 3, wherein the predators are selected from among beetles (Coleoptera) from the families Cleridae, in particular the genus Thanasimus, Ostomidae, in particular the genus Nemosoma, Staphilinidae and Rhizophagidae.

5. The method according to one of claims 3 or 4, wherein the attractant comprises at least one of the following components, including their isomers: ipsdienol, verbenol, lineatin, 3R,6R-vittatol, seudenol, lanierone, frontalin, alpha-pinene, chalcogran or bicolorin.

## Revendications

1. Procédé pour lutter contre des populations de bostryches de l'épicéa (Scolytidae), comprenant l'agrégation de prédateurs des bostryches de l'épicéa dans l'habitat des bostryches de l'épicéa, en ce qu'on étale au moins un appât, qui provoque l'attirance sélective de prédateurs des bostryches de l'épicéa contre lesquels on lutte, en des endroits dans lesquels on veut lutter contre la population des bostryches de l'épicéa, l'appât étalé étant différent du bouquet de phéromones d'agrégation des espèces de bostryches de l'épicéa contre lesquelles on lutte et le bouquet de phéromones correspondant à celui d'une espèce de bostryche de l'épicéa inconnue dans l'habitat.

2. Procédé selon la revendication précédente, dans lequel on étale au moins un appât avant ou pendant l'attaque par les bostryches de l'épicéa.

3. Procédé selon l'une quelconque des revendications précédentes, dans lequel l'appât provoquant l'agrégation des prédateurs comprend au moins un composant d'appât du bouquet de phéromones d'agrégation des espèces de bostryches de l'épicéa contre lesquelles on lutte.

4. Procédé selon la revendication 3, dans lequel les prédateurs sont choisis parmi les coléoptères (Coleoptera) des familles de Cleridae, en particulier du genre Thanasimus, Ostomidae, en particulier du genre Nemosoma, Staphilinidae et Rhizophagidae.

5. Procédé selon l'une quelconque des revendications 3 ou 4, dans lequel l'appât comprend au moins un des composants suivants, y compris leurs isomères : l'ipsdiénol, le verbénol, la linéatine, le 3R,6R-vittatol, le seudénol, la laniérone, la frontaline, l'alpha-pinène, le chalcogran ou la bicolorine.
